# EUROPÄISCHE PATENTANMELDUNG

(11) **EP 1 043 565 A2**
(43) Veröffentlichungstag der Anmeldung: **11.10.2000**
(21) Anmeldenummer: 00104171.4
(22) Anmeldetag: 29.02.2000
(51) Int. Cl.: G01C 9/00

(54) **Vorrichtung zum Überwachen der Neigung eines Geländes**

(30) Priorität: 31.03.1999 DE 19914699; 06.07.1999 DE 19931167
(71) Anmelder: Schreck, Martin, Dr., Kashiwa-shi 277-0835, Chiba-ken (JP); Grosswig, Stephan, Dr., 07747 Jena (DE); Nishigaki, Makoto, Dr. Prof., Himeji Shi 671-12 (JP)
(72) Erfinder: Schreck, Martin, Dr., Kashiwa-shi 227-0835, Chiba-ken (JP); Nishigaki, Makoto, Prof. Dr., Himeji Shi 671-12 (JP); Ecke, Wolfgang, Dr., 07747 Jena (DE); Schroeter, Siegmund, Dr., 07747 Jena (DE)
(74) Vertreter: Kruspig, Volkmar, Dipl.-Ing.

(57) **Zusammenfassung**

Die Erfindung betrifft eine Vorrichtung zum Überwachen der Neigung eines Geländes zwischen zwei verschiedenen hoch gelegenen Ebenen oder geneigten Begrenzungsflächen z.B. eines Dammes oder dergleichen Sperrbauwerkes mit mindestens einem Steigrohr (5), welches in die Böschung verbracht und dort bodenseitig verankert ist, wobei am Steigende faseroptische Sensorkabel (1-4) angeordnet sind.

## Beschreibung

Die Erfindung betrifft eine Vorrichtung zum Überwachen der Neigung eines Geländes zwischen zwei verschiedenen hoch gelegenen Ebenen oder geneigten Begrenzungsflächen, z.B. eines Dammes oder dergleichen Sperrbauwerkes mit mindestens einem Steigrohr, welches in die Böschung verbracht und dort bodenseitig verankert ist, gemäß Oberbegriff des Patentanspruches 1 sowie die Verwendung einer derartigen Vorrichtung.

Es ist bekannt, z.B. zum Überwachen von Böschungsrutschungen Neigungsmesser in Steigrohren anzuordnen.

Die Neigungsmesser, d.h. sogenannte Inklinometer, werden in die Steigrohre eingeführt, und durch ein z.B. vorgesehenes Pendel wird die Rohrbiegung als Maß für Geländebewegungen ermittelt.

In dem Falle, wenn der Rohrquerschnitt aufgrund des Abgleitens der Böschung sehr stark verformt ist, kann eine Neigungsmessung mit bekannten Mitteln nicht oder nur teilweise durchgeführt werden. Darüber hinaus besteht die Gefahr, daß ein im Rohr befindlicher Neigungsmesser aufgrund der Rohrverformung beschädigt wird. Hier wäre es notwendig, eine neue Bohrung auf der an sich gefährdeten Böschung einzubringen und ein neues Steigrohr abzuteufen. Es besteht dann jedoch die Gefahr, daß Mensch und Technik in Mitleidenschaft gezogen werden.

Es ist daher Aufgabe der Erfindung, eine weiterentwickelte Vorrichtung zum Überwachen der Neigung eines Geländes zwischen zwei verschieden hoch gelegenen Ebenen, z.B. einer Böschung oder geneigten Begrenzungsflächen eines Dammes oder dergleichen Sperrbauwerkes anzugeben, wobei die Meßgenauigkeit zu verbessern ist, ohne daß auch im Falle starker Verformungen der einzusetzenden Steigrohre die Meßtechnik vor Ort erneuert werden muß.

Die Lösung der Aufgabe der Erfindung erfolgt mit einer Vorrichtung nach den Merkmalen des Patentanspruchs 1, wobei die Unteransprüche mindestens vorteilhafte Weiterbildungen und Ausgestaltungen darstellen.

Erfindungsgemäß wird die Durchbiegung des Steigrohres oder eines entsprechenden elastischen Stabes mittels faseroptischen Sensorkabels bestimmt. Hierfür werden mehrere Kabel mit dem Rohr bzw. Stab form-, kraft- und/oder stoffschlüssig verbunden und verschiebungsfrei geführt.

Die Durchbiegung des Rohres, bedingt durch Geländebewegungen in der Böschung, bewirkt eine Streckung bzw. Stauchung des Rohres. Die hier auftretenden Kräfte werden mindestens teilweise auf die Faseroptik übertragen und sind durch faseroptische Meßmittel bestimmbar. Die Durchbiegungsrichtung des oder der Steigrohre(s) kann durch eine Dehnungsmessung an verschiedenen Punkten des Rohres oder Querschnittes ermittelt werden. Durch die faseroptische Sensorik ist es möglich, über die nicht unerhebliche Länge des Steigrohres ortsaufgelöste Biegemaße zu ermitteln.

Die Meßwerte respektive die ermittelten Durchbiegungen liegen in einem wesentlich größeren Bereich als mit Dehnmeßstreifen nachweisbar, bei welchen lediglich Dehnungen bis ca. 3% bestimmbar sind.

Mit einer Winkelanordnung der Fasern, d.h. einem vorgegebenen Steigungswinkel, und dem spiral- oder wendelförmigen Fixieren der Faseroptik am Rohr oder Stab kann die Meßauflösung erhöht werden, ohne daß die maximal zulässige Faserdehnung überschritten wird. Bevorzugt werden Faser-, Brillouin oder Bragg-Gitter-Sensoren eingesetzt.

Dadurch, daß umfangsseitig sich in axialer Richtung, d.h. längs des Rohres, mehrere faseroptische Sensorkabel erstrecken, ist die Bestimmung einer Biegerichtung möglich, und es kann die Bewegungsrichtung einer Gleitfläche beim Abrutschen z.B. einer Böschung ermittelt werden.

In einer Ausführungsform werden mindestens drei Kabel umfangsseitig sich in Längsrichtung erstreckend verteilt angeordnet, wobei das Optimum unter dem Aspekt der Erkennung der Biegerichtung im Bereich von vier bis acht Kabeln liegt, jedoch auch bereits mit zwei Kabeln eine ausreichende Meßgenauigkeit gegeben ist.

Erfindungsgemäß besteht weiterhin die Möglichkeit, durch die Wahl des Rohrmaterials bzw. der Wandstärke oder durch Verfüllen des Rohres mit einem Medium die Biegeelastizität gezielt zu verändern, um z.B. auch nachträglich eine Anpassung an die geologischen oder sonstigen Umweltgegebenheiten herbeizuführen, so daß der Meß- und Einsatzbereich der Vorrichtung vergrößert wird.

Bei einer Ausführungsform der Vorrichtung ist der Innenquerschnitt des Steigrohrs frei und kann eine zusätzliche, veränderbare, stabilisierende Funktion übernehmen. Wie erwähnt, kann bei starker Verformung des Trägerrohrs durch Einbringen eines zweiten Mediums in den Innenraum des Rohres dieses stabilisiert werden, wodurch der Meßbereich des Sensors quasi voreinstellbar ist oder der Meßbereich eines bereits bestehenden Sensors erweitert werden kann.

Weiterhin wesentlich ist die Möglichkeit der gekoppelten Überwachung von Temperatur- und Streßprofil mittels des faseroptischen Sensors. Demnach können bevorzugte Fließwege entlang der Gleitfläche bestimmt werden, da diese regelmäßig Veränderungen im Temperaturprofil hervorrufen. Der Sensor selbst weist eine lange Lebensdauer auf und die Gefahr einer plötzlichen Unbrauchbarkeit ab einer bestimmten Teufe ist gering.

Erfindungsgemäß besteht die Möglichkeit der Kopplung mehrerer Sensoren unter Bildung einer Sensorkette, wodurch eine dreidimensionale Online-Überwachung z.B. einer Böschungsrutschung oder eines lawinengefährdeten Gebiets realisierbar ist.

Die Erfindung soll nachstehend anhand eines Ausführungsbeispiels sowie unter Zuhilfenahme von Figuren näher erläutert werden.

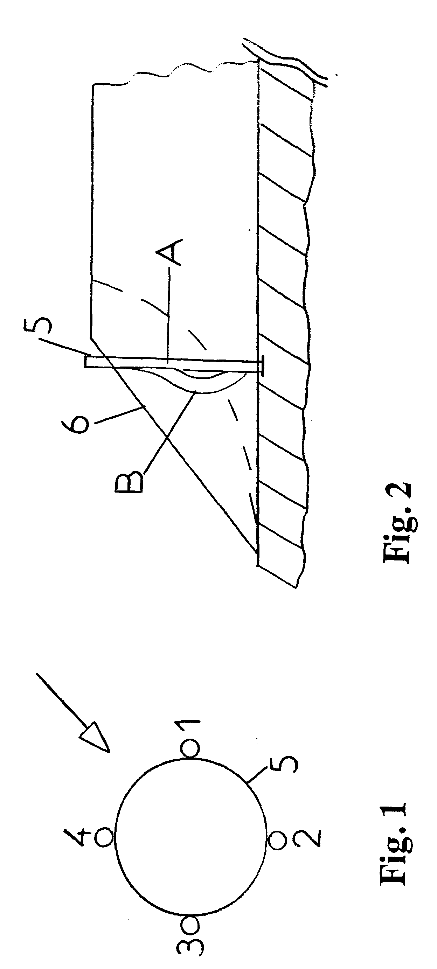

Die Figur 1 zeigt hierbei eine Draufsicht auf ein Steigrohr 5 mit außenumfangsseitig angeordneten faseroptischen Sensorkabeln 1 bis 4, und die Figur 2 eine seitliche Ansicht einer Böschung 6 mit dort eingebrachtem Steigrohr 5.

Wie in Figur 1 gezeigt, wird ein an sich bekanntes Steigrohr 5 außenumfangsseitig mit z.B. vier faseroptischen Sensorkabeln 1 bis 4 versehen, die fest, z.B. stoffschlüssig, mit dem Rohrmantel verbunden sind. Die Sensorkabel 1 bis 4 sind so verteilt umfangsseitig fixiert, daß eine möglichst genaue Bestimmung der Biegerichtung erfolgen kann.

Bei der mit Pfeildarstellung versehene Einwirkungsrichtung der Biegekräfte ergibt sich eine Biegezone -2 und -3 sowie eine Druckzone +1 und +4.

Das Steigrohr 5 gemäß Figur 2 befindet sich z.B. in einer Böschung 6 und ist bodenseitig verankert, wobei beim Ausbilden einer Gleitfläche Biegekräfte auf das Rohr einwirken. Figürlich ist mit A der Ausgangszustand und mit B der Biegezustand bezeichnet.

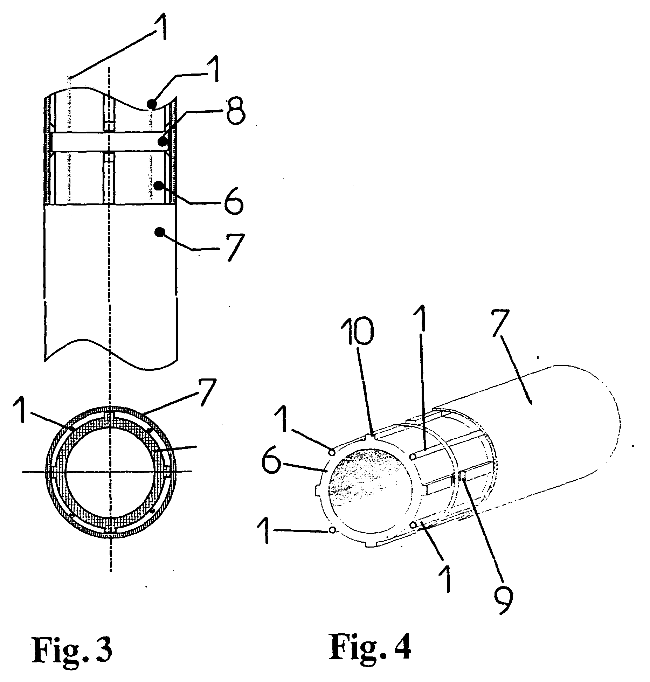

Die Fig. 3 zeigt einen Längsteilschnitt sowie einen Querschnitt eines Sensorrohrs gemäß Ausführungsbeispiel und die Fig. 4 einen solchen Sensor in einer teilweggebrochenen perspektivischen Darstellung.

Wie aus den Fig. 3 und 4 ersichtlich, ist das Sensorkabel 1 zwischen einem Außenrohr 7 und einem Innenrohr 6 über Halteringe 8 fixiert. Die Halteringe 8 klemmen oder pressen das Sensorkabel 1 an das Innenrohr, wobei die Halteringe 8 in Ausnehmungen 9 längsverlaufender Rippen 10 befindlich sind. Das Innenrohr 6 mit den Längsrippen 10, welche die Ausnehmungen 9 aufweisen, kann bevorzugt einstückig aus Kunststoff gefertigt sein. Grundsätzlich kann die Anwendung auch als Einzelrohr, d.h. ohne äußeres Rohr 7 ausgeführt werden.

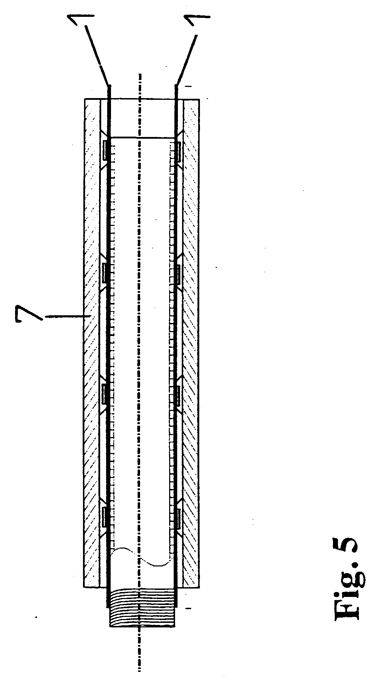

Fig. 5 zeigt einen Längsschnitt einer konstruktiven Variante eines Sensorstücks, das aneinandergefügt ein längeres Rohr entsprechend der gewünschten Teufe ergibt. Durch die leicht handhabbaren Rohrstücke gemäß Fig. 5 ergibt sich eine akzeptable Transportlänge, ohne daß die maximale Sensorlänge eingeschränkt ist. Das in den Fig. 3 bis 5 erkennbare Außenrohr 7 schützt das Sensorkabel bzw. die Fasern gegen den Druck des umgebenden Mediums, z.B. Erddruck.

Das Sensorkabel kann vor Ort am Innenrohr montiert werden mit anschließendem Überschieben des Außenrohrs, jedoch können auch komplette Segmentstücke fertiggestellt werden, wobei entsprechende Verbindungen für die Faserkabel vorzusehen sind.

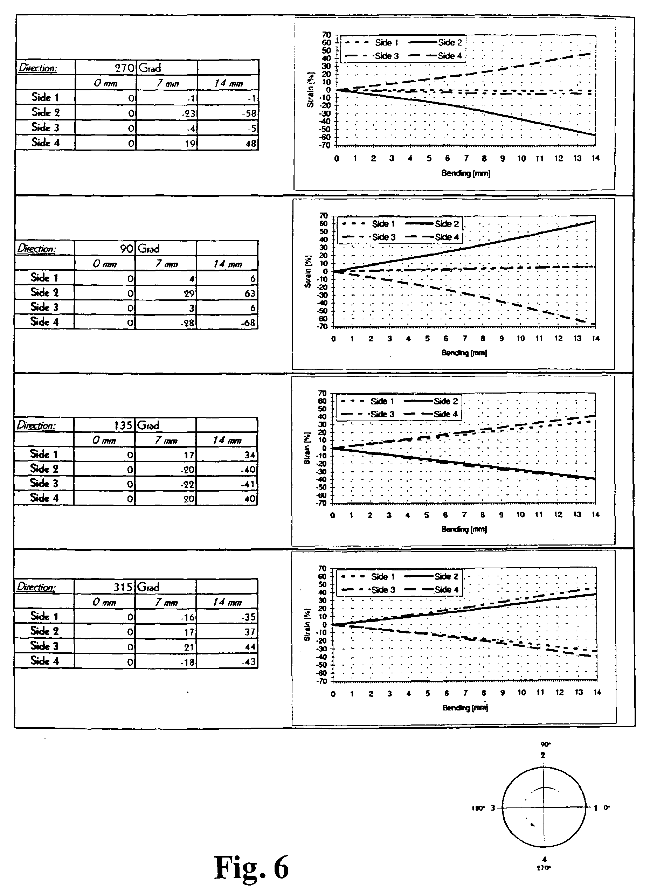

Fig. 6 demonstriert tabellarisch dargestellt Versuchsergebnisse, die mit einem realisierten Sensor erhalten wurden, wobei Durchbiegungsrichtungen gut erkennbar sind.

Durch eine mögliche Vorspannung der Faserkabeln lassen sich sowohl Dehnungs- als auch Stauchungszonen bestimmen. Hierbei werden an vier Punkten des Sensors Daten gewonnen, die die erwähnte Richtungsbestimmung der Verschiebung über Zeit und Weg gestatten. Bei einer einfachen Versuchsanordnung wurde ein Richtungsfehler <10% bis maximal 30% bei einer Durchbiegung von 270° festgestellt. Als Fehlerursache konnte ein Nachgeben der Vorspannung eines der Faserkabel festgestellt werden, was durch eine optimierte Befestigung, welche rutschfrei gestaltet ist und die eine gleiche Vorspannung auf allen Fasern sichert, überwunden wurde.

Das Innere des Rohres kann bei veränderten Umgebungsbedingungen durch ein Medium verfüllt oder ausgefüllt werden, so daß das Rohr größeren Biegekräften Stand hält und damit quasi eine Meßbereichserweiterung bewirkbar ist. Auch ist der Einsatz von elastischen Stäben anstelle von Rohren möglich.

In einer figürlich nicht dargestellten Ausführungsform besteht die Möglichkeit, das faseroptische Sensorkabel wendel- oder spiralförmig außenseitig des Steigrohres, auch mit gegenläufiger Wicklung anzuordnen, um größere Durchbiegungen erfassen zu können, ohne daß eine maximale Dehnung oder Stauchung des faseroptischen Kabels überschritten wird.

Mittels der Erfindung gelingt es in besonders einfacher Weise, bekannte Neigungswinkelmesser zum Ermitteln von z.B. Rutschungen an Böschungen zu ersetzen, wobei gleichzeitig eine verbesserte Ortsauflösung und ein größerer Meßbereich, insbesondere bezüglich bekannter Dehnmeßstreifen gegeben ist. Faseroptische Sensoren sind kostengünstig herstellbar, wobei durch Hintereinanderschalten mehrere Sensoren auch über mehrere Steigrohre eine leichtere Auswertung der Meßergebnisse erfolgen kann.

## Patentansprüche

1. Vorrichtung zum Überwachen der Neigung eines Geländes zwischen zwei verschieden hoch gelegenen Ebenen oder Punkten oder geneigten Begrenzungsflächen z.B. eines Dammes oder dergleichen Sperrbauwerkes mit mindestens einem Steigrohr oder Stab, welches bzw. welcher in die Böschung verbracht und dort bodenseitig verankert ist,
**dadurch gekennzeichnet,**
daß am oder im Steigrohr oder Stab form-, kraft- und/oder stoffschlüssig mehrere faseroptische Sensorkabel angeordnet sind, wobei die Durchbiegung des Steigrohres ortsaufgelöst über die Faseroptik ermittelbar ist.

2. Vorrichtung nach Anspruch 1,
**dadurch gekennzeichnet,**
daß die faseroptischen Sensorkabel sich in axialer Richtung längs des Steigrohres erstrecken und mindestens zwei, vorzugsweise drei Kabel umfangsseitig verteilt vorgesehen sind.

3. Vorrichtung nach Anspruch 1 oder 2,
**dadurch gekennzeichnet,**
daß die Biegefestigkeit des Steigrohres durch nachträgliches Einbringen eines Mediums an geänderte geologische bzw.
Neigungsbedingungen meßbereichserweiternd anpaßbar ist.

4. Vorrichtung nach einem der Ansprüche 1 bis 3,
**dadurch gekennzeichnet,**
daß bevorzugt umfangsseitig gleichverteilt vier bis acht sich längs erstreckende Sensorkabel außenseitig des Rohres angeordnet sind.

5. Vorrichtung nach Anspruch 1,
**dadurch gekennzeichnet,**
daß das faseroptische Sensorkabel wendel- oder spiralförmig das Steigrohr umgibt.

6. Vorrichtung nach Anspruch 5,
**dadurch gekennzeichnet,**
daß zur Erfassung von Stauchungen und Streckungen faseroptische Sensorkabel paarweise gegenläufig versetzt das Steigrohr umgeben.

7. Verwendung der Vorrichtung nach einem der Ansprüche 1 bis 6 zur Überwachung von Lawinen oder Gletschern, für die Früherkennung möglicher Vulkaneruptionen sowie für die Überwachung von Steig-, Sicker- und Beobachtungsschächten im Deponiebau durch Kontrolle des Setzens oder Fließens.
